# EUROPEAN PATENT SPECIFICATION

(11) **EP 0 827 380 B1**
(45) Date of publication and mention of the grant of the patent: **19.02.2003**
(21) Application number: 97908387.0
(22) Date of filing: 20.03.1997
(51) Int. Cl.: A44B 19/16, B29C 65/00

(54) **RECLOSABLE FASTENERS FOR PLASTICS BAGS AND THE LIKE**
WIEDERVERSCHLIESSBARE VERSCHLÜSSE FÜR KUNSTOFFBEUTEL
FERMETURES PAR PRESSION ET GLISSIERE POUR ELEMENTS TELS QUE DES SACS EN PLASTIQUE

(30) Priority: 20.03.1996 GB 9605855
(43) Date of publication of application: 11.03.1998
(73) Proprietor: Supreme Plastics Holdings Limited, Finchley London N3 2TL (GB)
(72) Inventor: OFFA-JONES, Martin, John, Charles, Whitby, North Yorkshire YO22 5HE (GB)
(74) Representative: W.P. THOMPSON & CO.
(86) International application number: GB9700781
(87) International publication number: WO97034510

(56) References cited:
- EP-A- 0 025 656
- US-A- 4 824 497
- US-A- 5 216 787

## Description

This invention relates to a closure strip or zipper for use as a reclosable fastener for plastics bags, pouches, etc. Such zippers comprise male and female profile elements located on a pair of opposed base members. The base members are arranged to be bonded to a substrate, such as film, in the manufacture of the reclosable bags, pouches, etc. Each base member and its profiled element are co-extruded. Such a zipper can be flanged, i.e. with the base members extending laterally out beyond the region of the male/female closure, or alternatively can be flangeless, i.e. with the male/female closure substantially laterally co-extensive with the base members.

It is well known to provide ribs of the same or another material on the base members, either on the outside in the case of a flangeless zipper, or on the inside and/or outside in the case of a flanged zipper. These ribs are used for the welding of the zipper to a plastics film or a laminate, for example on a form-fill-seal machine or on a bag-making machine where one has pre-made bags or pouches.

One of the problems with the provision of ribs on such zippers is the bulkiness of the product. Also, in the case where ribs are applied to flanges of a zipper one has the problem of flange curl.

US-A-5216787 describes a profile strip where an adhesive layer is attached to the lateral flanges, but not over the male/female profiled area, with the adhesive layer being subdivided into adhesive ribs each separated by an adhesive-free area. This is intended to prevent deformation of the flanges when they are cooled after extrusion.

US-A-4731911 describes a closure strip which is flangeless and has a dormant but reactivatable adhesive layer on the base surface of each part of the strip.

US-A-5004356 describes a fastener wherein a male fastener element and a female fastener element each consist of two layers, a welding portion for attachment to a substrate and a residual portion carrying the actual fastener structure.

US-A-5462360 describes a zipper consisting of a male profile strip and a female profile strip, each with stabilising wedges, and with an intermediate layer of low temperature melt material interposed between at least a portion of each of the profile strips and an associated substrate wall. Part of the intermediate layer may be of a non-seal material, but in each case the intermediate layer is overlaid over the whole base surface of each of the profile strips. This is aimed at increasing the accuracy of the seal position, but it can give rise to problems in getting the correct alignment.

US-A-4824497 describes a profiled fastener strip having a lateral flange for attachment to a film on the inside thereof. The longitudinal strength of the flange is reinforced by embedding filaments in grooves in the flange. These filaments are encapsulated in a sandwiching strip extruded onto the flange during the extrusion process.

It is an object of the present invention to eliminate the problems of flange curl.

It is a further object of the invention to provide a zipper in which the total amount of material used is reduced as compared with a ribbed zipper.

The zipper of the present invention has particular advantages when the zipper is wound onto and stored on a reel.

In accordance with the present invention there is provided a reclosable fastener comprising a first profiled base member having a male profile, and a second profiled base member having a female profile, with each base member having at least one zone of a different material co-extruded therewith,
**characterised in that** each base member has an attachment surface on the face opposite the profile to which a substrate overlying the attachment surface and said at least one zone is arranged to be attached, and in that the material of said zones serves to enhance, retard or prevent welding of the overlying substrate thereto and is recessed into the respective base member so that the outer surface of the. zone or zones is flush with the attachment surface.

Preferably, each base member has flanges extending laterally from the profile with the attachment surface on the outside thereof, and the flanges carry said zones of material.

In other words, the zones of different material are inset into the base members so as not to disturb the flat surfaces of the base members.

The co-extruded flat zones can consist of weld enhancing/temperature reducing material, weld retarding material, or weld prevention material. Alternatively, the co-extruded flat zones may comprise tie layer polymers to weld the zipper and film/laminate of different or non-weldable materials together.

A number of embodiments of co-extruded base strip or zipper in accordance with the invention will now be described by way of example and with reference to the accompanying drawings, in which:
Fig. 1 shows a flangeless zipper where the co-extruded inserts extend over part of the width of the base members;
Fig. 2 shows a flanged zipper where the closure is centrally positioned and inserts are provided on the outside of all flanges;
Fig. 3 shows a flanged zipper where the closure is positioned offset from the centre and where inserts are provided on the outside of all flanges;
Fig. 4 shows a flanged zipper where the closure is again offset and where the co-extruded inserts are provided part-way along the width of each base member; and,
Fig. 5 shows a flanged zipper where the closure is positioned centrally and where the co-extruded inserts are offset on the base members.

In each of the Figures of the drawings, which are only schematic, the same parts are indicated by the respective same reference numerals.

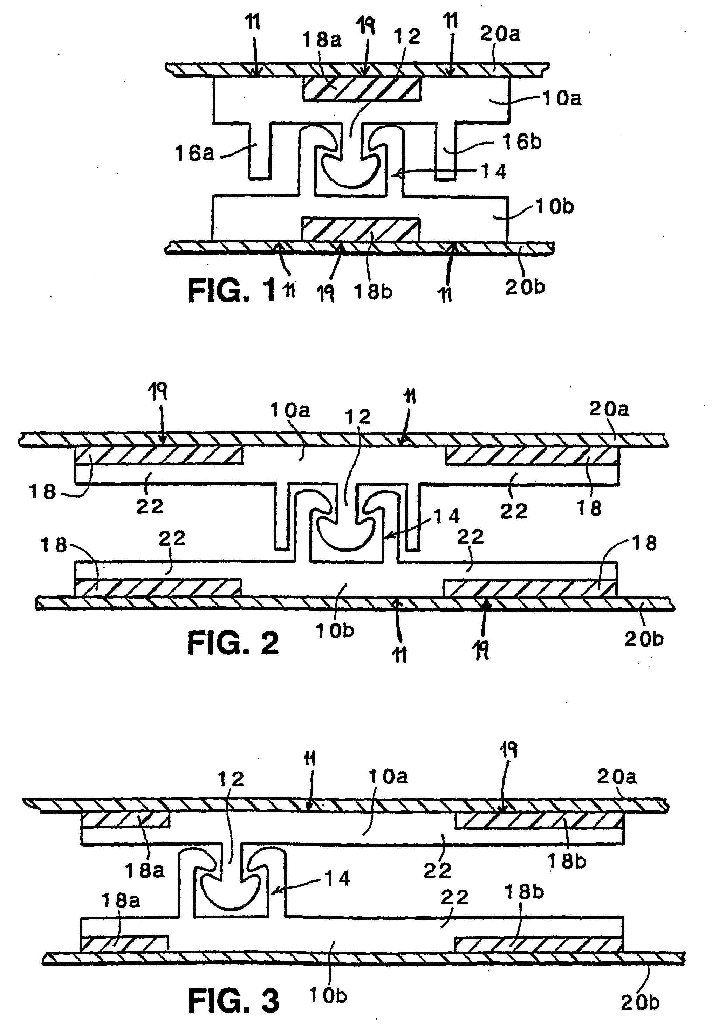

In Fig. 1, which shows a flangeless zipper, a first base member 10a has a male profile 12 and an opposed base member 10b has a female profile 14 consisting of two upstanding hooks. A pair of wedges 16a, 16b are also provided on the first base member, outside the female hooks when the zipper is closed. An insert 18a, 18b is co-extruded with each base member 10a, 10b over a width substantially co-extensive with the profiles. Each insert 18a, 18b has a flat outer surface 19 which lies flush with the surface 11 of the base member. Typically, each insert 18a, 18b is recessed to about half the thickness of the respective base member. The respective base members 10a, 10b are attached, for example by welding, to a substrate 20a, 20b which may be the walls of a reclosable bag, joined to form an enclosure with a mouth.

Fig. 2 shows a flanged zipper in which the male and female profiles 12, 14 are positioned centrally and where each of the four flanges 22 has a co-extruded insert 18 recessed into its outer face. The insert zones 18 do not extend over that part of the base member which is co-extensive with the closure 12, 14.

Fig. 3 shows an arrangement similar to Fig. 2, but here the closure 12, 14 is offset from the centre. The inserts 18a on the side with the shorter flanges are smaller in size than the inserts 18b on the flanges of greater length, in order not to extend over the zone defined by the closure 12, 14.

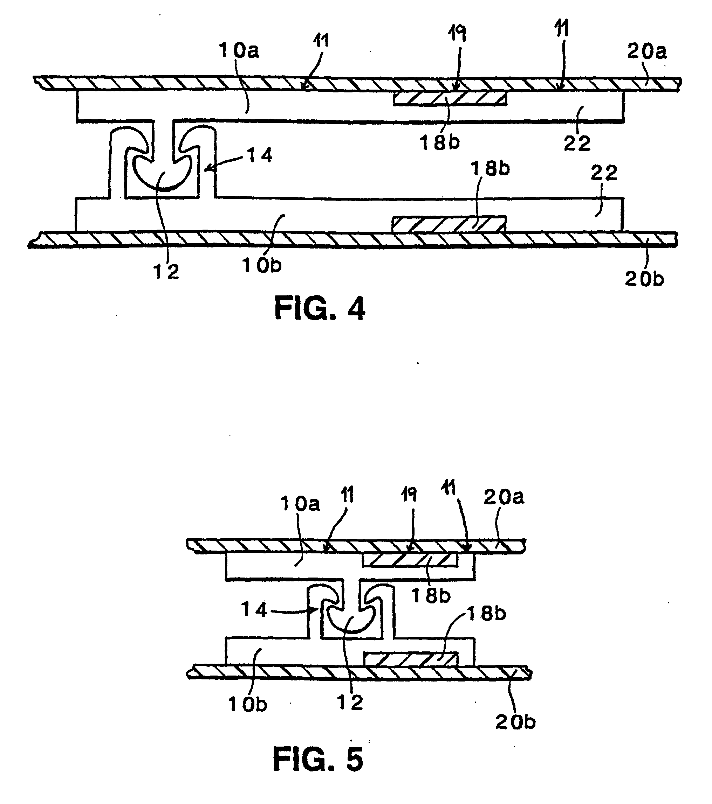

Fig. 4 shows a flanged zipper in which the closure 12, 14 is positioned very close to one edge of the zipper and where only two inserts 18 are provided, part-way between the closure 12, 14 and the flange ends.

Fig. 5 shows a flanged zipper where the flanges are small and where the co-extruded inserts 18b are recessed in the base members so as to bridge the junction between the closure 12, 14 and the flanges.

The co-extruded inserts 18, 18a, 18b in the various embodiments can consist of weld enhancing/temperature reducing materials, for example EVA and ionomers. Alternatively, one can use weld-retarding materials in order to achieve a peel seal effect. Yet again, the inserts can be made from a weld prevention material, for example a polymer which is incompatible for welding with itself or with some other material. These co-extruded inserts can be used where it is undesirable for technical or cost reasons to make the whole zipper from these materials.

One can also use tie layer polymers as the recessed inserts to weld together the zipper and a film/laminate of a different or non-weldable material.

By avoiding the use of ribs of material on the zippers one can eliminate curling of the flanges in the case of flanged zippers. Also, the total amount of material used is reduced as compared with a ribbed zipper, and even in the case of a mono-zipper the total amount of material used is not increased. As a consequence of this, the volume of a wound reel, the carriage costs and the overall costs all show advantages over the use of ribbed zippers, and there are also advantages over mono-zipper.

Again in comparison with a ribbed zipper, the point seal/side crush effort required prior to bag side welding is reduced both in form-fill-seal machines and bag-making machines, and the bag quality is improved. Air holes which can occur between the ribs after side crush are eliminated.

The materials used for the inserts 18, 18a, 18b are relatively expensive as compared with the basic materials of the base members, and in accordance with the invention they are only used where they are actually needed for welding/non-welding reasons. In those embodiments where a flat co-extruded region is provided on part of the flange or closure base, then a wider weld may be used which is effective exactly where it is needed for the zipper to function with optimum performance and/or strength. The inset materials can be selected for specific requirements. Positioning a weld very accurately is otherwise very difficult to achieve. The improved welding is achievable both with symmetrical and non-symmetrical closures. In each embodiment, the thickness of the inset material 18, 18a, 18b is preferably about half the total thickness of the base member, disregarding the male/female profile portions.

Yet a further advantage of the invention is that one achieves a smooth zipper weld or welds, which is not possible with a ribbed zipper.

The improved zipper in accordance with the invention can be used both on form-fill-seal machines and also bag-making machines, with the zipper being welded to film or laminate to make bags or pouches.

## Claims

1. A reclosable fastener comprising a first profiled base member (10a) having a male profile (12), and a second profiled base member (10b) having a female profile (14), with each base member (10a, 10b) having at least one zone (18, 18a, 18b) of a different material co-extruded therewith, **characterised in that** each base member (10a, 10b) has an attachment surface (11) on the face opposite the profile (12, 14) to which a substrate (20a, 20b) overlying the attachment surface (11) and said at least one zone is arranged to be attached, and **in that** the material of said zones (18, 18a, 18b) serves to enhance, retard or prevent welding of the overlying substrate thereto and is recessed into the respective base member (10a, 10b) so that the outer surface (19) of the zone or zones is flush with the attachment surface (11).

2. A reclosable fastener as claimed in claim 1, **characterised in that** each base member (10a, 10b) has flanges (22) extending laterally from the profile (12, 14) with the attachment surface (11) on the outside thereof, and the flanges (22) carry said zones (18, 18a, 18b) of material.

3. A reclosable fastener as claimed in claim 2, **characterised in that** the recessed material (18b) extends across a boundary between a flange (20a, 20b) and that part of the base member (10a, 10b) which overlies the male/female profiles (12, 14).

4. A reclosable fastener as claimed in claim 2, **characterised in that** the fastener has four flanges (22) and a zone (18, 18a, 18b) of material is recessed into the attachment surface (11) of each flange at the lateral edge thereof.

5. A reclosable fastener as claimed in claim 2, **characterised in that** the fastener has two flanges (22) with the male/female closure at one side of the fastener, and a zone (18b) of material is recessed into the attachment surface (11) of each flange part way between the closure (12, 14) and the lateral edge of the flanges.

6. A reclosable fastener as claimed in any preceding claim , **characterised in that** the male/female profiles (12, 14) are offset from the centre of the fastener.

7. A reclosable fastener as claimed in claim 1, **characterised in that** the zones (18a, 18b) of recessed material are substantially co-extensive with the male/female profiles (12, 14).

8. A reclosable fastener as claimed in any preceding claim, **characterised in that** the thickness of the zones (18, 18a, 18b) of recessed material is about half the thickness of a base member (10a, 10b).

9. A reclosable fastener as claimed in any preceding claim, **characterised in that** the zone material comprises EVA or an ionomer.

10. A reclosable plastics bag or pouch having a reclosable fastener as claimed in any preceding claim.

## Patentansprüche

1. Wiederverschließbares Befestigungselement, das ein erstes profiliertes Grundelement (10a) mit einem männlichen Profil (12), und ein zweites profiliertes Grundelement (10b) mit einem weiblichen Profil (14) umfasst, wobei jedes Grundelement (10a, 10b) wenigstens eine Zone (18, 18a, 18b) eines damit gemeinsam extrudierten, anderen Materials aufweist, **dadurch gekennzeichnet, dass** jedes Grundelement (10a, 10b) eine Befestigungsfläche (11) auf der Fläche entgegengesetzt dem Profil (12, 14) aufweist, an der ein die Befestigungsfläche (11) und die genannte wenigstens eine Zone überlagerndes Substrat (20a, 20b) angeordnet ist, um befestigt zu werden, und dass das Material der genannten Zonen (18, 18a, 18b) zum Verstärken, Hemmen oder Verhindern von Schweißen des darüber liegenden Substrats an dasselbe dient, und in das jeweilige Grundelement (10a, 10b) so eingelassen ist, dass die Außenfläche (19) der Zone oder Zonen bündig mit der Befestigungsfläche (11) ist.

2. Wiederverschließbares Befestigungselement nach Anspruch 1, **dadurch gekennzeichnet, dass** jedes Grundelement (10a, 10b) Flansche (22) aufweist, die sich seitlich von dem Profil (12, 14) mit der Befestigungsfläche (11) an der Außenseite derselben erstrecken, und die Flansche (22) die genannten Materialzonen (18, 18a, 18b) tragen.

3. Wiederverschließbares Befestigungselement nach Anspruch 2, **dadurch gekennzeichnet, dass** sich das eingelassene Material (18b) über die Grenzfläche zwischen einem Flansch (20a, 20b) und demjenigen Teil des Grundelements (10a, 10b) erstreckt, der das männliche/weibliche Profil (12, 14) überlagert.

4. Wiederverschließbares Befestigungselement nach Anspruch 2, **dadurch gekennzeichnet, dass** das Befestigungselement vier Flansche (22) umfasst und eine Materialzone (18, 18a, 18b) in die Befestigungsfläche (11) jedes Flanschs an der Seitenkante desselben eingelassen ist.

5. Wiederverschließbares Befestigungselement nach Anspruch 2, **dadurch gekennzeichnet, dass** das Befestigungselement zwei Flansche (22) mit dem männlichen/weiblichen Verschluss an einer Seite des Befestigungselements umfasst, und eine Materialzone (18b) in die Befestigungsfläche (11) jedes Flansches auf einem Teil des Weges zwischen dem Verschluss (12, 14) und der Seitenkante der Flansche eingelassen ist.

6. Wiederverschließbares Befestigungselement nach einem vorhergehenden Anspruch, **dadurch gekennzeichnet, dass** das männliche/weibliche Profil (12, 14) von dem Mittelpunkt des Befestigungselements versetzt sind.

7. Wiederverschließbares Befestigungselement nach Anspruch 1, **dadurch gekennzeichnet, dass** die Zonen (18a, 18b) aus eingelassenem Material sich im wesentlichen gemeinsam mit dem männlichen/weiblichen Profil (12, 14) erstrecken.

8. Wiederverschließbares Befestigungselement nach einem vorhergehenden Anspruch, **dadurch gekennzeichnet, dass** die Dicke der Zonen (18, 18a, 18b) aus eingelassenem Material etwa die Hälfte der Dicke eines Grundelements (10a, 10b) beträgt.

9. Wiederverschließbares Befestigungselement nach einem vorhergehenden Anspruch, **dadurch.gekennzeichnet, dass** das Zonenmaterial EVA oder ein Ionomer aufweist.

10. Wiederverschließbarer Kunststoffbeutel oder Tasche mit einem wiederverschließbaren Befestigungselement nach einem vorhergehenden Anspruch.

## Revendications

1. Attache refermable comprenant un premier élément de base profilé (10a) ayant un profil mâle (12), et un deuxième élément de base profilé (10b) ayant un profil femelle (14), alors que chaque élément de base (10a, 10b) possède au moins une zone (18, 18a, 18b) dans un matériau différent qui est co-extrudé avec celui-ci, **caractérisée en ce que** chaque élément de base (10a, 10b) possède une surface de fixation (11), sur la face opposée au profil (12, 14), sur laquelle un substrat (20a, 20b) recouvrant la surface de fixation (11) et ladite au moins une zone est disposé pour être attaché, et **en ce que** le matériau desdites zones (18, 18a, 18b) sert à améliorer, retarder ou empêcher le soudage du substrat de recouvrement avec celles-ci, et se trouve en retrait dans l'élément de base respectif (10a, 10b) de sorte que la surface externe (19) de la zone ou des zones soit de niveau avec la surface de fixation (11).

2. Attache refermable, selon la revendication 1, **caractérisée en ce que** chaque élément de base (10a, 10b) possède des brides (22) qui s'étendent dans le plan latéral à partir du profil (12, 14) alors que la surface de fixation (11) se trouve à l'extérieur de celles-ci, et les brides (22) portent lesdites zones (18, 18a, 18b) de matériau.

3. Attache refermable, selon la revendication 2, **caractérisée en ce que** le matériau en retrait (18b) s'étend à travers une zone-limite entre une bride (20a, 20b) et cette partie de l'élément de base (10a, 10b) qui recouvre les profilés mâle/femelle (12, 14).

4. Attache refermable, selon la revendication 2, **caractérisée en ce que** l'attache possède quatre brides (22) et une zone (18, 18a, 18b) de matériau est placée en retrait dans la surface de fixation (11) de chaque bride sur le bord latéral de celle-ci.

5. Attache refermable, selon la revendication 2, **caractérisée en ce que** l'attache possède deux brides (22), la fermeture mâle/femelle se trouvant d'un côté de l'attache, et une zone (18b) de matériau est placée en retrait dans la surface de fixation (11) de chaque bride, partiellement entre la fermeture (12, 14) et le bord latéral des brides.

6. Attache refermable, selon l'une quelconque des revendications précédentes, **caractérisée en ce que** les profilés mâle/femelle (12, 14) sont décalés par rapport au centre de l'attache.

7. Attache refermable, selon la revendication 1, **caractérisée en ce que** les zones (18a, 18b) de matériau en retrait ont essentiellement la même étendue que les profilés mâle/femelle (12, 14).

8. Attache refermable, selon l'une quelconque des revendications précédentes, **caractérisée en ce que** l'épaisseur des zones (18, 18a, 18b) de matériau en retrait est environ égale à la moitié de l'épaisseur de l'élément de base (10a, 10b).

9. Attache refermable, selon l'une quelconque des revendications précédentes, **caractérisée en ce que** le matériau de la zone est composé d'EVA ou d'un ionomère.

10. Poche ou sac plastique refermable possédant une attache refermable, selon l'une quelconque des revendications précédentes.
